**Europäisches Patentamt**

**European Patent Office**

**Office européen des brevets**

(19)

(11) Veröffentlichungsnummer : **0 151 207**
**B1**

(12) EUROPÄISCHE PATENTSCHRIFT

(45) Veröffentlichungstag der Patentschrift :
**10.02.88**

(51) Int. Cl.⁴ : **B 62 D 11/04**, B 60 K 23/00

(21) Anmeldenummer : **84101342.8**

(22) Anmeldetag : **09.02.84**

(54) Steuerschaltung, insbesondere für ein Kettenfahrzeug.

(43) Veröffentlichungstag der Anmeldung :
**14.08.85 Patentblatt 85/33**

(45) Bekanntmachung des Hinweises auf die Patenterteilung : **10.02.88 Patentblatt 88/06**

(84) Benannte Vertragsstaaten :
**AT CH DE FR LI**

(56) Entgegenhaltungen :
**WO-A-80 /002 40**
**DE-B- 2 236 859**
**GB-A- 1 361 419**
**US-A- 3 874 468**
**US-A- 3 914 938**

(73) Patentinhaber : **MOOG GmbH**
**Hanns-Klemm-Strasse 28**
**D-7030 Böblingen (DE)**

(72) Erfinder : **Von Braun, Erik**
**Friedrich-Ebert-Strasse 7**
**D-7032 Sindelfingen (DE)**

(74) Vertreter : **Patentanwälte Grünecker, Dr. Kinkeldey,**
**Dr. Stockmair, Dr. Schumann, Jakob, Dr. Bezold,**
**Meister, Hilgers, Dr. Meyer-Plath**
**Maximilianstrasse 58**
**D-8000 München 22 (DE)**

**Beschreibung**

Die vorliegende Erfindung betrifft eine Steuerschaltung für ein Fahrzeug, insbesondere für ein Kettenfahrzeug, nach dem Oberbegriff des Anspruchs 1.

Aus der GB-A-13 61 419 ist bereits eine derartige Steuerschaltung für ein Radfahrzeug bekannt, dessen Fahrtrichtung durch die relative Drehgeschwindigkeit der beiden, durch Antriebseinheiten betätigten Antriebsräder bestimmt wird. Die erste Schaltung zum Erzeugen des die Soll-Geschwindigkeit des Fahrzeuges darstellenden ersten Signales umfaßt ein Potentiometer, dessen Schleifer von der Bedienungsperson des Fahrzeugs in eine Stellung gebracht wird, die der gewünschten Fahrgeschwindigkeit des Fahrzeuges entspricht. Die am Schleifer anliegende, die Soll-Geschwindigkeit darstellende Spannung wird zwei Potentiometern zugeführt, deren jeweiliger Schleifer durch die Fahrzeuglenkung betätigt wird. Die beiden Potentiometer der Lenkeinrichtung erzeugen das zweite bzw. dritte Signal, das der gewünschten Antriebsgeschwindigkeit des zugeordneten Antriebsrades der jeweiligen Antriebseinheit entspricht. Jedem der beiden hydraulikbetriebenen Antriebseinheiten der Antriebsräder sind Tachogeneratoren zugeordnet, die ein die jeweilige Drehgeschwindigkeit des zugeordneten Antriebsrades darstellendes Geschwindigkeitssignal erzeugen. Das die Ist-Geschwindigkeit darstellende Tachosignal sowie das die Soll-Geschwindigkeit darstellende zweite bzw. dritte Signal werden den beiden Eingängen einer Steuerschaltung mit drei Schaltzuständen zugeführt, die die Verstelleinrichtung für die Hydraulikpumpe ansteuert.

Bei einer derartigen, bekannten Steuerschaltung kann das Problem auftreten, daß ein im Hydrauliköl befindliches Schmutzteilchen einen Strömungskanal im Bereich der Hydraulikpumpe verstopft. Dies führt zu einem sofortigen Maximalausschlag der Verstell-Hydraulikpumpe und somit zu einer unerwünschten Beschleunigung der von dieser Hydraulikpumpe betriebenen Antriebseinheit. Die schlagartige Erhöhung der Antriebsgeschwindigkeit dieser Antriebseinheit führt zu einem ungewollten, schlagartig beginnenden Kurvenfahren. Derartige, plötzlich auftretende, unerwünschte Fahrzustände sind allenfalls bei langsam fahrenden Radfahrzeugen oder bei sich im Gelände bewegenden Kettenfahrzeugen hinnehmbar. Bei jeglichen schnell laufenden Fahrzeugen, die sich im Straßenverkehr bewegen, insbesondere bei schnell laufenden Kettenfahrzeugen kann jedoch eine derartige Fehlfunktion der Verstell-Hydraulikpumpe zu schweren Unfällen führen.

Gegenüber diesem Stand der Technik liegt der vorliegenden Erfindung die Aufgabe zugrunde, eine Steuerschaltung der eingangs genannten Art so weiterzubilden, daß die Verkehrssicherheit eines mit einer derartigen Steuerschaltung ausgerüsteten Fahrzeuges weiter erhöht wird.

Diese Aufgabe wird bei einer Steuerschaltung nach dem Oberbegriff des Anspruchs 1 durch die im kennzeichnenden Teil des Anspruchs 1 angegebene Maßnahme gelöst.

Bei der erfindungsgemäßen Steuerschaltung, die insbesondere bei einem Kettenfahrzeug eingesetzt wird, kann durch den direkten Abgriff eines Geschwindigkeitssignales ein Grenzwert erzeugt werden, der porportional zu der maximal durch eine der beiden Antriebseinheiten einnehmbaren Geschwindigkeit ist. Beim Messen der Geschwindigkeit einer jeden Antriebseinheit und Vergleichen des Geschwindigkeitssignals mit dem Grenzsignal wird ein Differenzsignal erzeugt, das bei einer ordnungsgemäßen Funktion der jeweiligen Antriebseinheiten nur eine einzige Polarität aufweisen darf.

Dies beruht darauf, daß die Antriebsgeschwindigkeit einer jeden Antriebseinheit kleiner oder höchstens gleich einer Sollgröße bei Geradeausfahrt des Fahrzeuges, insbesondere des Kettenfahrzeuges werden kann. Erhält nun das Differenzsignal eine gegenüber der vorbestimmten Polarität umgekehrte Polarität, so ist dies ein sicherer Hinweis auf eine Fehlfunktion einer hydraulischen Antriebseinheit. Dieses Fehlersignal wird zur automatischen Bremsung des Kettenfahrzeugs verwendet.

Vorzugsweise liegt das erste Signal im Vergleich zu dem zweiten und drittten Signal in dem durch Anspruch 2 beschriebenen Bereich, so daß gewährleistet ist, daß auch ein geringfügiges Ansteigen der Antriebsgeschwindigkeit der ersten oder zweiten Antriebseinheit bei steiler Bergabfahrt nicht zu einem ungewünschten Ansprechen der Komparatorschaltung führt.

Bevorzugte Ausgestaltungen der Steuerschaltung sind in den Ansprüchen 3 und 4 angegeben.

Ausführungsformen bekannter Steuerschaltungen sowie bevorzugte Ausführungsbeispiele gemäß der vorliegenden Erfindung werden nachfolgend unter Bezugnahme auf die beiliegenden Zeichnungen näher beschrieben.

Es zeigen :

Figur 1 eine perspektivische Darstellung eines Kettenfahrzeugs unter Hervorhebung der hydraulischen Aggregate ;

Figur 2 ein Prinzipschaltbild einer Steuerschaltung nach dem Stand der Technik ;

Figur 3 eine Vektordarstellung des Lenkverhaltens eines mit der Steuerschaltung nach Fig. 2 ausgerüsteten Kettenfahrzeugs ;

Figur 4 eine Prinzipdarstellung eines Hydrauliksystems und einer Steuerschaltung für ein Kettenfahrzeug gemäß der vorliegenden Erfindung ;

Figur 5 einen detaillierten Schaltplan der in Fig. 4 gezeigten Steuerschaltung ;

Figur 6 Ausführungsformen von Lenkpotentiometern für die in Fig. 5 gezeigte Steuerschaltung sowie eine vom Lenkwinkel abhängige Prinzipdarstellung des Schaltzustandes eines Lenkradschalters ;

Figur 7 eine Vektordarstellung des Lenkverhaltens eines mit der Steuerschaltung nach den Fig. 4 und 5 ausgerüsteten Kettenfahrzeugs bei einem kleinen und bei einem mittleren Lenkeinschlag ;

Figur 8 eine Vektordarstellung des Lenkverhaltens des mit der Steuerschaltung nach dem Fig. 4 und 5 ausgerüsteten Kettenfahrzeugs bei einem relativ hohen Lenkeinschlag ;

Figur 9 einen Teil der Steuerschaltung nach den Figuren 4 und 5 bei dem in Figur 8 dargestellten Lenkeinschlag ;

Figur 10 eine Vektordarstellung des Lenkverhaltens eines mit der Steuerschaltung nach den Figuren 4 und 5 ausgerüsteten Kettenfahrzeugs bei maximalem Lenkeinschlag ; und

Figur 11 einen Teil der Steuerschaltung nach den Figuren 4 und 5 bei dem in Figur 10 dargestellten Lenkeinschlag.

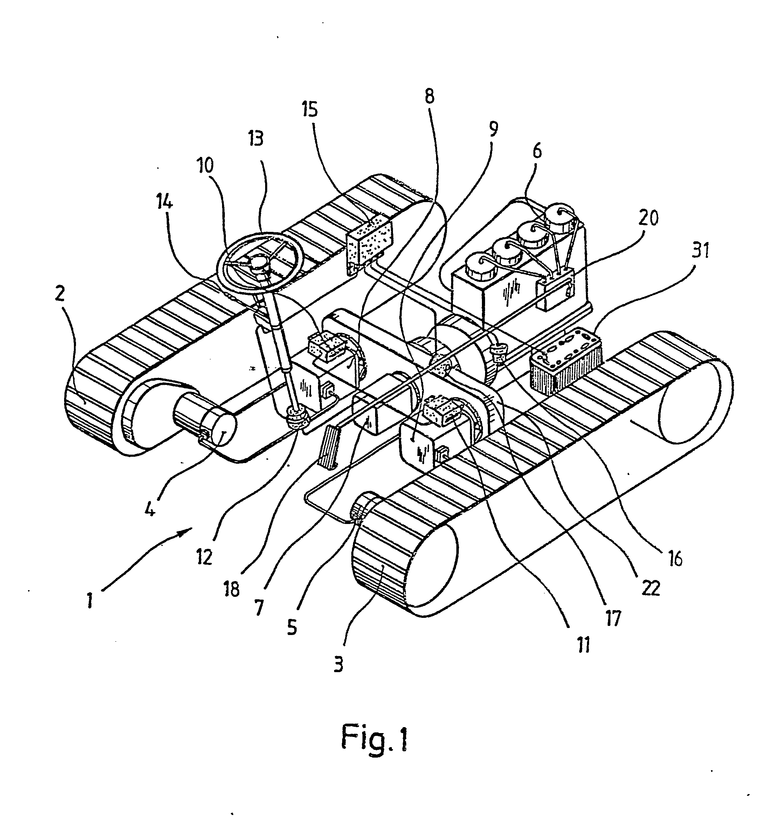

Figur 1 zeigt eine perspektivische Darstellung eines Kettenfahrzeugs 1 bei zeichnerischer Hervorhebung des elektrischen Steuersystems und des hydraulischen Antriebssystems dieses Kettenfahrzeugs 1. Das Kettenfahrzeug 1 hat eine linke Antriebskette 2 und eine rechte Antriebskette 3, die jeweils von einem linken und einem rechten Hydromotor 4, 5 über ein nichtdargestelltes Ketten-Untersetzungsgetriebe angetrieben werden. Das Kettenfahrzeug 1 hat einen Antriebsmotor 6, der über ein Getriebe eine Arbeitspumpe 7, eine linke Verstellpumpe 8 und eine rechte Verstellpumpe 9 antreibt. Die von den Verstellpumpen 8, 9 geförderte Hydraulikdurchflußmenge wird durch ein der linken Verstellpumpe 8 zugeordnetes linkes Servoverstellgerät 10 und ein der rechten Verstellpumpe 9 zugeordnetes rechtes Servoverstellgerät 11 gesteuert. Üblicherweise ist das Servoverstellgerät derart ausgelegt, daß ein im wesentlichen linearer Zusammenhang zwischen einem Eingangssteuerstrom des Servoverstellgerätes und der geförderten Hydraulikdurchflußmenge der Verstellpumpe 8, 9 besteht. Die Verstellpumpen 8, 9 liegen in einem Hydraulikkreis mit dem ihnen zugeordneten Hydromotor 4, 5. Zum Lenken des Kettenfahrzeugs 1 dient ein von einem Lenkrad 13 betätigter Lenkgeber 12. Die Wahl der Fahrtrichtung wird mit einem in der Nähe des Lenkrades 13 angeordneten Fahrtrichtungsschalter 14 vorgenommen. Der Lenkgeber 12 und der Fahrtrichtungsschalter 14 stehen in Signalübertragungsverbindung mit einer Fahrelektronik 15. Die momentane Drehzahl des Antriebsmotors 6 wird von einem Drehzahl-Istwertgeber 16 gemessen. Der Istwertgeber 16 führt diese Information der Fahrelektronik 15 zu. Ein Drehzahl-Sollwertgeber 17 sowie eine Einspritzpumpe 20 sind über ein Gaspedal 18 betätigbar.

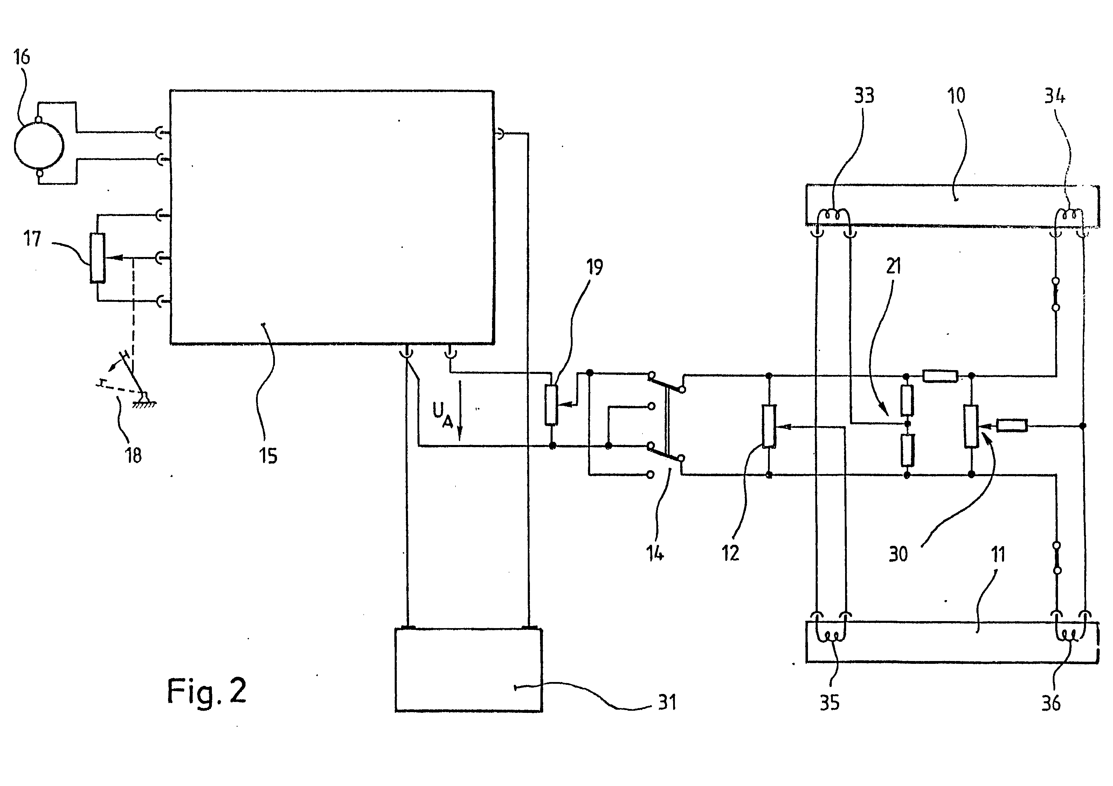

Das in Figur 1 dargestellte Kettenfahrzeug 1 arbeitet mit der in der Figur 2 dargestellten Steuerschaltung nach dem Stand der Technik. Ein Kettenfahrzeug des in Figur 1 gezeigten Types kann, ohne daß hierzu irgendwelche mechanische oder hydraulische Teile abgewandelt werden müssen, mit der erfindungsgemäßen Steuerschaltung ausgerüstet werden. In diesem Zusammenhang sei darauf hingewiesen, daß das Anwendungsgebiet der erfindungsgemäßen Steuerschaltung nicht auf Kettenfahrzeuge begrenzt ist, da die erfindungsgemäße Steuerschaltung unter Beibehaltung sämtlicher vorteilhafter Wirkungen gegenüber der Schaltung nach dem Stand der Technik auch bei einem Radfahrzeug eingesetzt werden kann, dessen Lenkung durch Einstellen der Differenzgeschwindigkeit zwischen einem linksseitigen und einem rechtsseitigen Radsatz vorgenommen wird. Derart gelenkte Radfahrzeuge werden insbesondere für den Baustellen- und Gelände-Fahrbetrieb eingesetzt.

Figur 2 zeigt eine Steuerschaltung nach dem Stand der Technik, die bei dem in Figur 1 gezeigten Kettenfahrzeug eingesetzt wird. Mit dem Gaspedal 18, das ebenfalls in Figur 1 gezeigt ist, ist der gleichfalls in Figur 1 angedeutete Drehzahl-Sollwertgeber 17, der als Potentiometer ausgeführt ist, einstellbar. Dieser Drehzahl-Sollwertgeber 17 sowie ein Drehzahl-Istwertgeber 16 sind an einer an sich im Stand der Technik bekannten, und für die vorliegende Erfindung nicht relevante Fahrelektronik 15 angeschlossen.

Die Fahrelektronik 15 führt in einer an sich im Stand der Technik bekannten Weise in Abhängigkeit vom Belastungszustand des Motors sowie von der Abweichung zwischen dem Signal des Drehzahl-Istwertgebers und des Drehzahl-Sollwertgebers über eine entsprechende Einstellung der Ausgangsspannung $U_A$ eine Regelung der Geschwindigkeit des Kettenfahrzeugs 1 durch. Je höher die Ausgangsspannung $U_A$ der Fahrelektronik 15 ist, desto höher ist die Hydraulikdurchflußmenge der linken und rechten Verstellpumpe 8, 9, die von dem linken und rechten Servoverstellgerät 10, 11 angesteuert werden. Bei zu starkem Abfall der Istdrehzahl gegenüber der Solldrehzahl vermindert die Fahrelektronik 15 ihre Ausgangsspannung $U_A$, um die Fahrgeschwindigkeit und damit die Motorbelastung zu vermindern.

Die in Fig. 2 gezeigte Steuerschaltung nach dem Stand der Technik enthält ein die Ausgangsspannung $U_A$ der Fahrelektronik 15 teilendes Geschwindigkeitspotentiometer 19, das auch als « Inchpotentiometer » bezeichnet wird. Dieses Potentiometer ist an ein Handrad angeschlossen, mit dem die Bedienungsperson des Kettenfahrzeugs 1 die gewünschte Fahrgeschwindigkeit einstellt. Bei hohen Fahrwiderständen, wie beispielsweise beim Bergauffahren des Kettenfahrzeugs 1 wird das Geschwindigkeitspotentiometer so eingestellt, daß an dessen Ausgangsseite lediglich ein kleiner Teil der Spannung $U_A$ erscheint. Das Geschwindigkeitspotentiometer 19 ist ausgangsseitig an einen als Doppelumschalter ausgeführten Fahrtrichtungsschalter 14 angeschlossen.

Eine Batterie bzw. ein Akkumulator 31 übernimmt die Energieversorgung der Fahrelektronik 15 sowie der an die Fahrelektronik 15 angeschlossenen Schaltung.

Jedes Servoverstellgerät 10, 11 enthält zwei Spulen 33, 34 ; 35, 36, wobei die Betätigung der Servoverstellgeräte 10, 11 zur Steuerung der Verstellpumpen 8, 9 jeweils proportional zur Summe der den Spulen 33, 34 ; 35, 36 zugeführten Ströme ist. Das in Fahrtrichtung linksseitige Servoverstellgerät 10 hat also eine erste Spule 33, die als Lenkspule 33 bezeichnet wird, und eine zweite Spule 34, die als Fahrspule bezeichnet wird. Entsprechend weist das rechte Servoverstellgerät eine erste Spule 35 auf, die als Lenkspule bezeichriet wird, und eine zweite Spule 36 auf, die wiederum als Fahrspule bezeichnet wird.

Der Lenkgeber 12, der als Potentiometer ausgeführt ist, liegt parallel zum Ausgang des Fahrtrichtungsschalters 14. Der Mittelabgriff bzw. Schleifer des Lenkpotentiometers 12 ist an die rechte Lenkspule 35 angeschlossen, die in Reihe zu der linken Längsspule 33 liegt. Die Reihenschaltung der Lenkspulen 33, 35 ist mit einer derartigen Polung der Spulen 33, 35 vorgenommen, daß ein die Spulen 33, 35 durchfließender Strom zu einer entgegengesetzten Betätigung der zugehörigen Servoverstellgeräte 10, 11 führt. Das der Spule 35 abgewandte Ende der Spule 33 ist an einen Fest-Spannungsteiler 21 angeschlossen, der wiederum parallel zum Lenkpotentiometer 12 liegt. Damit durchsetzt die Spulen 33, 35 ein Strom, der proportional zur Abweichung der Lage des Schleifers des Lenkpotentiometers 12 von dessen Mittenstellung ist.

Parallel zum Spannungsteiler 21 liegt über einen Reihenwiderstand eine als Potentiometer ausgeführte gerade Geradetrimmungsschaltung 30. Zwischen dem Mittelabgriff und je einem Endkontakt des Potentiometers 30 ist die linke bzw. die rechte Fahrspule 34, 36 geschaltet. Der jeweilige Strom durch die Fahrspulen 34, 36 ist proportional zur Ausgangsspannung $U_A$ der Fahrelektronik 15. Der Geradeauslauf des Kettenfahrzeugs 1 kann durch Einstellen des Potentiometers 30 korrigiert werden.

Bei einem Lenkeinschlag am Lenkgeber 12 fließt ein Strom durch die linke und rechte Lenkspule 33, 35, wobei der Strom durch die linke Lenkspule 33 die entgegengesetzte Richtung des Stromes durch die rechte Lenkspule 35 hat. Entsprechend wird bei einem Lenkeinschlag das linke Servoverstellgerät in entgegengesetzter Richtung wie das rechte Servoverstellgerät betätigt.

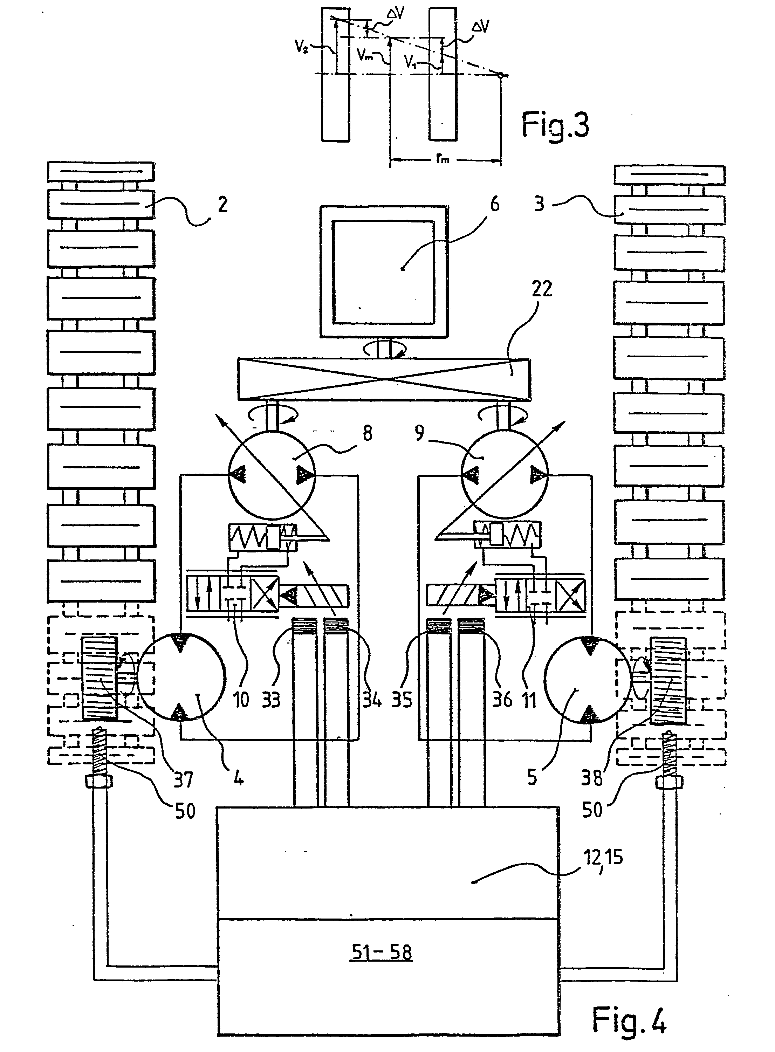

Eine derartige Betätigung führt zu dem in Fig. 3 durch eine Vektordarstellung repräsentierten Lenkverhalten des Kettenfahrzeugs 1. Die Erhöhung des das linke Servoverstellgerät 10 erregenden Gesamtstromes durch den die linke Lenkspule 33 durchsetzenden Strom führt zu einer entsprechenden Erhöhung der Hydraulikdurchflußmenge der linken Verstellpumpe 8, was zu einer gegenüber der Geschwindigkeit bei Geradeausfahrt $v_m$ erhöhten Geschwindigkeit $v_2$ der linken Antriebseinheit führt. Um einen entsprechenden Betrag $\Delta v$ wird die Geschwindigkeit $v_1$ der rechten Antriebseinheit abgesenkt. Dies führt zu einer durch die Geschwindigkeiten $v_2$, $v_1$ vorgegebenen Kurve mit dem Radius $r_m$. Im Stand der Technik war man ständig bemüht, das Fahrverhalten eines Kettenfahrzeugs, das mit einem Lenkrad gelenkt wird, möglichst dem Fahrverhalten eines Automobils anzugleichen, so daß man selbstverständlich davon ausging, daß die Kurvensteuerung eines Kettenfahrzeugs 1 derart vorgenommen werden muß, daß die mittlere Geschwindigkeit des Kettenfahrzeugs $v_m$ unverändert bleibt. Wird bei einem derartigen Lenkkonzept die mittlere Geschwindigkeit $v_m$ des Fahrzeugs 1 in den Bereich der maximalen Geschwindigkeit angehoben, so führt dies zu einer Betätigung der Servoverstellgeräte 10, 11, die im Bereich der maximalen Auslenkung liegen. Mit anderen Worten arbeiten bei einer derartigen Betriebsweise beide Verstellpumpen 8, 9 mit maximaler Hydraulikdurchflußmenge pro Zeiteinheit. Wird nun ein Lenkeinschlag des Lenkgebers 12 vorgenommen, so wird ein entsprechender Lenkstrom den jeweiligen Lenkspulen 33, 35 zugeführt. Da die linke Verstellpumpe bereits mit einer Hydraulikdurchflußmenge pro Zeiteinheit arbeitet, die nahe an der maximalen Hydraulikdurchflußmenge liegt, ist keine weitere Erhöhung der Hydraulikdurchflußmenge der linken Verstellpumpe 8 möglich. Daher bewirkt der Lenkstrom lediglich eine Absenkung der Hydraulikdurchflußmenge der rechten Verstellpumpe 9, und somit lediglich eine Lenkwirkung, die in etwa halb so groß ist, wie diejenige, die bei entsprechendem Lenkeinschlag im mittleren Geschwindigkeitsbereich des Kettenfahrzeugs erreicht wird.

Fig. 4 zeigt eine prinzipielle Darstellung der hydraulischen Geräte und elektrischen Schaltungen des mit einer erfindungsgemäßen Steuerschaltung ausgerüsteten Kettenfahrzeugs 1. Diejenigen Bezugszeichen, die den Bezugszeichen der Fig. 1 und 2 entsprechen, bezeichnen gleiche oder ähnliche Teile. Der Motor 6 treibt über ein Getriebe 22 die linke und rechte Verstellpumpe 8, 9 an, die jeweils über linke und rechte Servoverstellgeräte 10, 11 betätigt werden. Die Verstellpumpen 8, 9 liegen in einem hydraulischem Kreis mit den Hydromotoren 4, 5, die jeweils ein linkes und rechtes Zahnrad 37, 38 antreiben, die die Antriebsketten 2, 3 bewegen. Die Drehzahl der Zahnräder 37, 38 wird durch Impulsfühler 50 erfaßt, die jeweils einen Impuls pro Zahn des Zahnrades 37, 38 erzeugen, der sich an ihnen vorbeibewegt. Die Impulsfühler 50 sind an eine Sicherheitsschaltung 51 bis 58 angeschlossen, die wiederum mit der Fahrelektronik und dem Lenkgeber 12, 15 in Verbindung steht. Hieran sind wiederum eine erste und zweite linke Spule 33, 34 und eine erste und zweite rechte Spule 35, 36 angeschlossen.

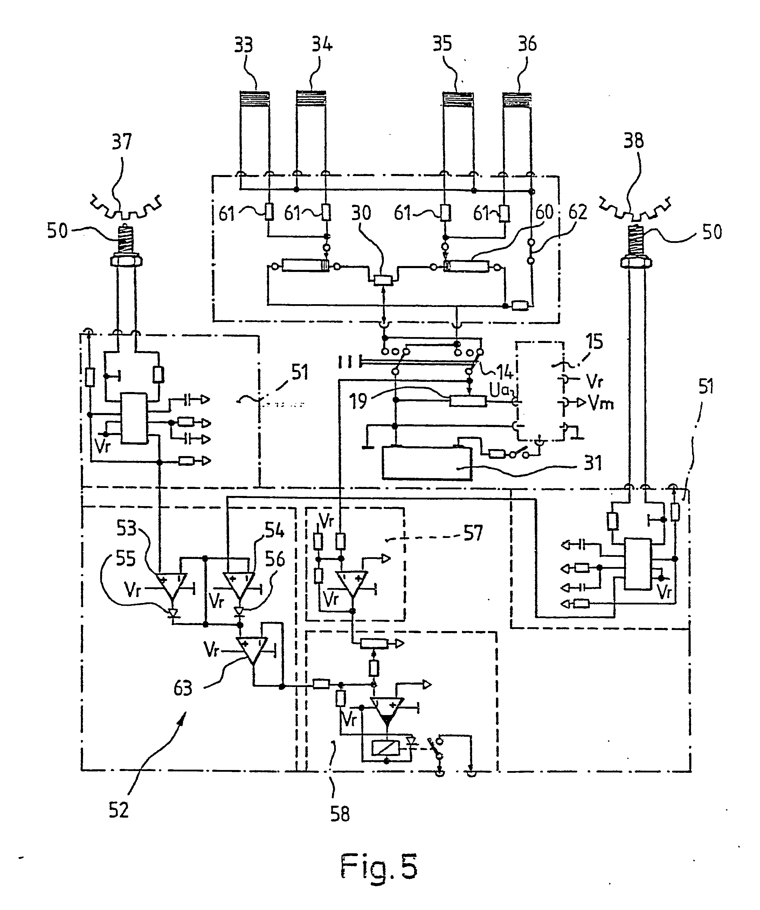

Zur detaillierten Beschreibung des erfindungsgemäßen Steuerschaltung ist nachfolgend auf Fig. 5 bezug genommen. Die Ausgangsspannung $U_A$ der Fahrzeugelektronik 15 wird über das Geschwindigkeitspotentiometer 19 geteilt und an den Fahrtrichtungsschalter 14 angelegt. Eine Ausgangsklemme des Fahrtrichtungsschalters 14 liegt am Mittelabgriff der als Potentiometer ausgeführten Geradetrimmungsschaltung 30. Die Außenkontakte dieses Geradetrimmungspotentiometers 30 sind mit den Enden von Lenkpotentiometern 59, 60 verbunden, an denen sich der jeweilige Schleifer der Lenkpotentiometer bei Geradeausstellung der Lenkeinrichtung 12, 13 befindet. Die jeweils gegenüberliegenden Endkontakte der Lenkpotentiometer 59, 60 sind an einen gemeinsamen Fußpunkt angeschlossen, der an dem anderen Ausgangskontakt des Fahrtrichtungsschalters 14 angeschlossen ist. Dieser ist über einen Serienwiderstand mit einem dazu in Reihe geschalteten Lenkradschalter 62, der nachfolgend näher erläutert wird, mit einem gemeinsamen Anschlußpunkt der Spulen 33 bis 36 verbunden. Die jeweils einem Servoverstellgerät zugehörigen Spulen 33, 34 ; 35, 36 liegen über Reihenwiderstände an dem Mittenabgriff bzw. Schleifer des zugehörigen Lenkpotentiometers 59, 60.

Die Antriebsgeschwindigkeit der rechten und linken Antriebskette 2, 3 wird durch Messung der Drehzahl der zugehörigen Zahnräder 37, 38 mittels diesen Zahnrädern zugeordneter Impulsfühler 50 gemessen. Die Impulsfühler 50 sind an Frequenz-Spannungs-Wandler 51 angeschlossen, deren Ausgangssignal eine zur Antriebsgeschwindigkeit proportionale Spannung ist. Diese Signale werden nicht-invertierenden Eingängen von Operationsverstärkern 53, 54 zugeführt, deren Ausgänge über Dioden 55, 56 mit einem gemeinsamen Punkt verbunden sind, der seinerseits mit den invertierenden Eingängen der Operationsverstärker 53, 54 verbunden ist. Diese Schaltung erzeugt ausgangsseitig ein Signal, das dem jeweils größeren der Eingangssignale entspricht. Das auf diese Weise erzeugte Ausgangssignal wird einem Impedanzwandler 63 zugeführt.

Ein vom Mittelabgriff des Geschwindigkeitspotentiometers 19 abgezweigtes Spannungssignal, dessen Größe der Sollgeschwindigkeit des Kettenfahrzeugs proportional ist, wird einem Verstärker 57 zugeführt. Das Ausgangssignal des Verstärkers 57 wird mit dem Ausgangssignal des Impedanzwandlers 63 in einer Komparatorschaltung 58 verglichen. Die Verstärkung der Verstärkerschaltung 57 ist derart eingestellt, daß bei üblichem, störungsfreien Betrieb das absolute Ausgangssignal der Schaltung 57 um etwa 5-20 % größer ist als das absolute Ausgangssignal des Impedanzwandlers 63.

Überschreitet das absolute Ausgangssignal des Impedanzwandlers 63 die absolute Ausgangsspannung des Verstärkers 57, so leitet die Komparatorschaltung 58 die Zwangsbremsung ein. Anstelle der Impulszähler 50 und der Frequenz-Spannungswandler 51 kann zum Erfassen der Drehzahl der Antriebseinheiten 1, 2 ein an der linken und rechten Verstellpumpe 8, 9 angebrachtes Potentiometer (nicht dargestellt) verwendet werden, da die jeweilige mechanische Lage der verstellbaren Teile der Verstellpumpe 8, 9 der von der Verstellpumpe geförderten Hydraulikmenge und somit der Geschwindigkeit der Antriebskette 2, 3 entspricht.

Aufgrund des erfindungsgemäßen Konzeptes bleibt die jeweils kurvenäußere Antriebskette bei einer Antriebsgeschwindigkeit, die der Antriebsgeschwindigkeit bei Geradeausfahrt entspricht.

Daher ist es möglich, durch Überwachung der Antriebsgeschwindigkeit einen Rückschluß auf ein fehlerhaftes Verhalten der Verstellpumpen 8, 9 zu ziehen. Wenn beispielsweise ein Hydraulikströmungskanal einer Verstellpumpe 8, 9 durch einen Schmutzpartikel verstopft wird, kann dies dazu führen, daß sich die Verstellpumpe 8, 9 so verstellt, daß sie mit maximalen Durchsatz fördert. Ein derartiger Fehler führte beim Stand der Technik zu einer nicht durch Gegenlenken korrigierbaren, ungewollten schlagartigen Kurvenfahrt des Kettenfahrzeugs. Durch die Schaltung 50, 51 wird das Ansteigen der Antriebsgeschwindigkeit ermittelt und im Komparator durch Vergleich mit der Soll-Antriebsgeschwindigkeit zu einem Fehlersignal weiter verarbeitet. Dieses Fehlersignal führt zu einem automatischen Anhalten oder Zwangsbremsen des Kettenfahrzeugs.

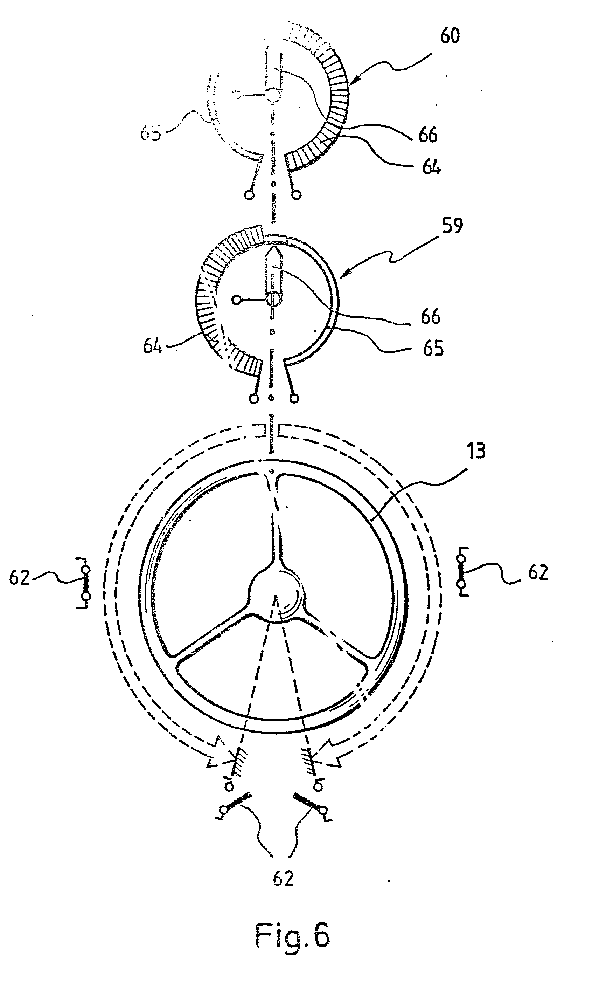

Vorzugsweise werden die in der Figur 5 gezeigten Lenkpotentiometer 59, 60 in spiegelsymmetrischer Weise aufgebaut, wie dies in den detaillierten Darstellungen dieser Lenkpotentiometer 59, 60 in Figur 6 gezeigt ist. Das linke Lenkpotentiometer 59 ist derart aufgebaut, daß es lediglich bei einem gegenüber der Mittelstellung eines Schleifers 66 nach links abweichenden Lenkeinschlag zu einer Signalveränderung führt, während ein nach rechts abweichender Lenkeinschlag das Signal am Mittenabgriff oder Schleifer 66 unverändert läßt. Das rechte Lenkpotentiometer ist symmetrisch bezüglich der Mittellage des Schleifers 66 ausgebildet. Vorzugsweise besteht das linke Lenkpotentiometer 59 aus einer Widerstandsschicht 64, die bei einem etwa 5° von der Neutrallage des Schleifers 66 abweichenden Winkel beginnt und sich annähernd 170° in die nach links gerichtete Drehrichtung erstreckt. Durch einen mit dem Lenkeinschlag in die linke Drehrichtung von der Mittellage aus zunehmenden Widerstandswert pro Längeneinheit bzw. pro Winkeleinheit wird ein erwünschtes, progressives Lenkverhalten erreicht. Der rechte Teil des Schleifweges des Schleifers 66 ist aus einem leitfähigen Material, wie beispielsweise Silberdraht gefertigt, so daß eine Verschwenkung des Schleifers 66 in die rechte Drehrichtung gegenüber Neutrallage keine Veränderung des am Schleifer 66 abgegriffenen Signales mit sich bringt.

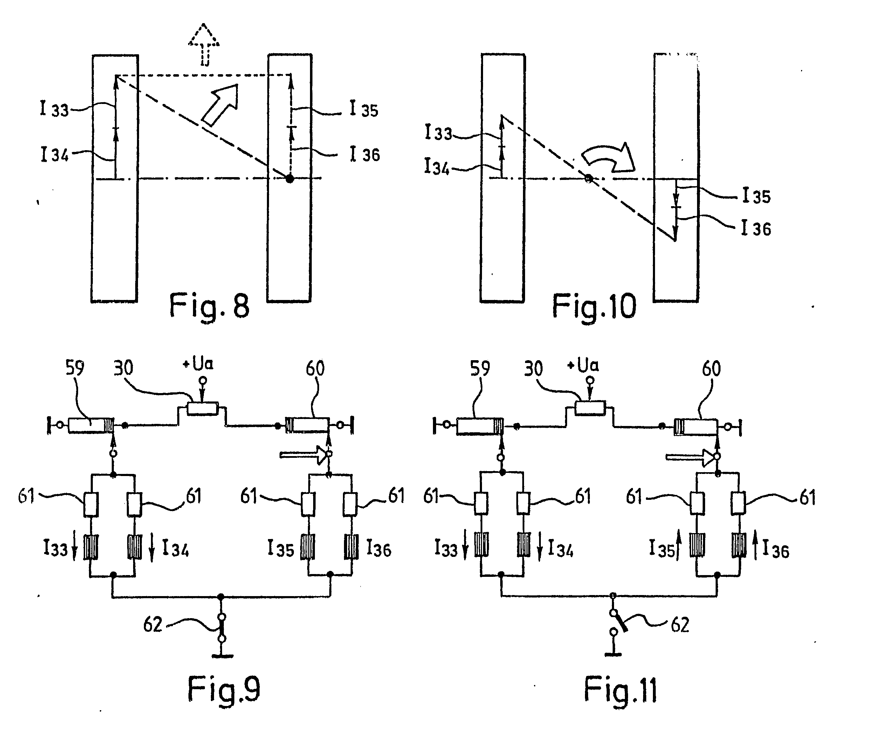

Am Lenkrad 13 ist ein Lenkradschalter 62 angebracht, der lediglich bei maximalem Lenkeinschlag in die rechte oder linke Drehrichtung geöffnet wird. Ansonsten ist der Lenkradschalter 62 geschlossen. Bezüglich der Funktion des Lenkradschalters wird auf die Beschreibung in Zusammenhang mit den Figuren 8 bis 11 verwiesen.

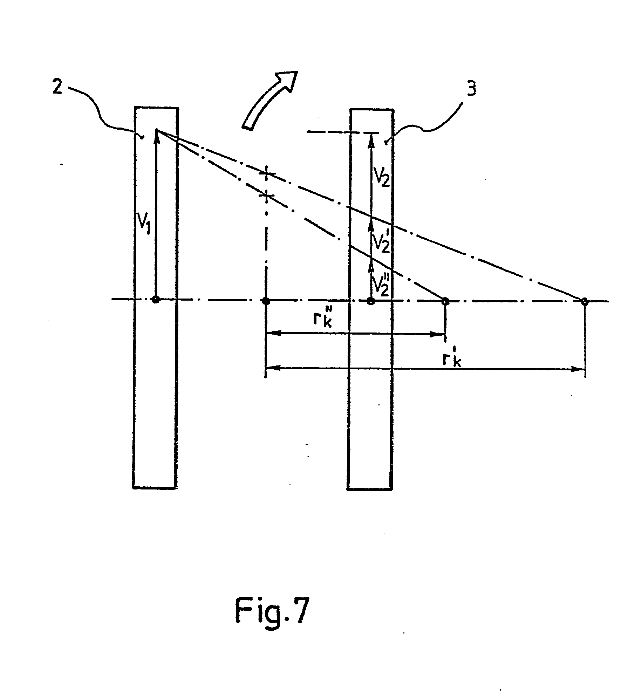

Figur 7 ist eine Vektordarstellung des Lenkverhaltens des mit der Steuerschaltung gemäß den Figuren 4 und 5 ausgerüsteten Kettenfahrzeugs. Wird das in Figur 6 gezeigt Lenkrad beispielsweise um 20° nach rechts gedreht, so bewegt sich der Schleifer des linken Lenkpotentiometers 59 lediglich auf dem leitenden Material 65, während sich der Schleifer des rechten Lenkpotentiometers 60 auf dem Widerstandsmaterial bewegt.

Daher ändert sich das gemäß Figur 5 am Schleifer 66 des rechten Lenkpotentiometers 60 abgegriffene Signal, während das entsprechende Signal am Lenkpotentiometer 59 unverändert bleibt. Dementsprechend werden die erste und zweite Spule 33, 34 des linken Servoverstellgerätes mit unverändertem Strom beaufschlagt, während der Strom, der durch die Spulen 35, 36 des rechten Servoverstellgerätes fließt, absinkt. Dementsprechend sinkt die Antriebsgeschwindigkeit des rechten Antriebssatzes ab, während diejenigen des linken Antriebssatzes unverändert bleibt. Damit wird durch Variation der Antriebsgeschwindigkeit der rechten Antriebskette 3 der Kurvenradius $r_k'$, $r_k''$ verändert.

Wird das in Fig. 1 und 6 gezeigte Lenkrad 13 bis kurz vor dem maximalen Lenkeinschlag weiter nach rechts bewegt, so reduziert sich der durch die Spulen 35, 36 des rechten Servoverstellgerätes 11 fließende Strom $I_{35}$, $I_{36}$ auf Null, während der durch die Spulen 33, 34 des linken Servoverstellgerätes 10 fließende Strom $I_{33}$, $I_{34}$ unverändert bleibt. Hierbei führt das Kettenfahrzeug 1 eine Drehung um seine rechte Kette durch, die eine bestimmte Winkelgeschwindigkeit hat. Diese Drehung ist durch die Vektordarstellung der Figur 8 angedeutet, während die entsprechenden durch die Spulen 33 bis 36 fließenden Ströme in der Figur 9 gezeigt sind.

Wird nun das in Figur 6 gezeigte Lenkrad 13 an den rechten Lenkanschlag bewegt, so öffnet sich der Lenkradschalter 62. Hierbei wird der in den Figuren 9 und 11 gezeigte gemeinsame Fußpunkt der Spulen 33 bis 36 von Masse getrennt. In diesem Moment wird der durch die linken Spulen 33, 34 fließende Strom halbiert, während der durch die rechten Spulen fließende Strom 35, 36 den umgekehrt entgegengesetzten Wert des durch die Spulen 33, 34 fließenden Stromes annimmt. Mit anderen Worten führt das Öffnen des Lenkradschalters 62 zu einer Umschaltung der Spulenanordnung von Parallelschaltung zu Serienschaltung. Dadurch, daß der durch die Spulen 33, 34 fließende Strom halbiert wird, während der durch die Spulen 35, 36 fließende Strom $I_{35}$, $I_{36}$ den entgegengesetzt gleichen Wert der Ströme $I_{33}$, $I_{34}$ annimmt, führt das Kettenfahrzeug eine Drehung auf der Stelle aus, die die gleiche Winkelgeschwindigkeit hat wie die kurz vor Erreichen des maximalen Lenkausschlages durchgeführte Drehbewegung. Ein Schema dieser Drehbewegung ist in der Figur 10 wiedergegeben.

Die erfindungsgemäße Steuerschaltung kann ebenfalls bei einem Radfahrzeug eingesetzt werden, das durch Einstellung einer Differenzgeschwindigkeit des linken Radsatzes zum rechten Radsatz gelenkt wird.

Ebenfalls kann die erfindungsgemäße Steuereinrichtung mit kontaktfreien, elektronischen Lenkgebern arbeiten.

Gleichfalls kann die beschriebene elektrische Ansteuerung der Servoverstellgeräte durch eine gleichwirkende hydraulische Ansteuerung ersetzt werden.

**Patentansprüche**

1. Steuerschaltung für ein Fahrzeug, insbesondere ein Kettenfahrzeug (1), das einen Motor (6) zum Antreiben von Hydraulikpumpen (8, 9) aufweist, die mit Antriebseinheiten (2-5) in Strömungsverbindung stehen, mit einer mit der Steuerschaltung signalmäßig verbundenen Lenkeinrichtung (12, 13), mit Verstelleinrichtungen (10, 11), die die Hydraulikdurchflußmenge der Hydraulikpumpen (8, 9) in Abhängigkeit von von der Steuerschaltung empfangenen Signalen steuern, mit einer ersten Schaltung (15, 19) zum Erzeugen eines ersten Signales, das die Soll-Geschwindigkeit des Fahrzeugs (1) darstellt, mit einer zweiten Schaltung (50, 51) zum Erzeugen eines zweiten Signales, das die Antriebsgeschwindigkeit der ersten Antriebseinheit (2, 4) darstellt und mit einer dritten Schaltung (50, 51) zum Erzeugen eines dritten Signales, das die Antriebsgeschwindigkeit der zweiten Antriebseinheit (3, 5) darstellt, wobei die Steuerschaltung in Reaktion auf ein einen Lenkeinschlag der Lenkeinrichtung (12, 13) darstellendes Lenksignal das Steuersignal für die Verstelleinrichtung (10) der Hydraulikpumpe (8) der kurveninneren Antriebseineiht (2, 4) gegenüber dem Steuersignal für diese Verstelleinrichtung (10) bei einem die Geradeausstellung der Lenkeinrichtung (12, 13) darstellenden Lenksignal derart ändert, daß das Fahrzeug (1) bei unverändertem Steuersignal für die jeweils andere Verstelleinrichtung (11) die diesem Lenkeinschlag entsprechende Kurve durchfährt, gekennzeichnet durch eine Komparatorschaltung (58), der das erste, zweite und dritte Signal zugeführt werden und die ein eine Bremsung des Fahrzeuges (1) bewirkendes Signal erzeugt, wenn das zweite Signal oder das dritte Signal größer ist als das erste Signal.

2. Schaltung nach Anspruch 1, dadurch gekennzeichnet, daß die erste, zweite und dritte Schaltung (15, 19 ; 50, 51) derart ausgelegt sind, daß das zweite und dritte Signal bei fehlerfreiem Betrieb der Hydraulikpumpen (8, 9) um 5 % bis 20 % niedriger sind als das erste Signal.

3. Steuerschaltung nach Anspruch 1 oder 2, dadurch gekennzeichnet, daß die zweite und dritte Schaltung (50, 51) jeweils durch einen an der Antriebseinheit (2, 3, 4, 5) angebrachten Impulszähler (50) und durch einen mit dem Impulszähler (50) verbundenen Frequenz-Spannungs-Wandler (51) gebildet sind.

4. Steuerschaltung nach Anspruch 1 oder 2, dadurch gekennzeichnet, daß die zweite und dritte Schaltung (50, 51) jeweils durch ein mit den Verstelleinrichtungen (10, 11) verbundenes Potentiometer gebildet sind.

**Claims**

1. Control circuit for a vehicle, in particular a tracked vehicle (1), provided with a motor (6) for driving hydraulic pumps (8, 9), which are in fluid communication with drive units (2-5), with a steering system (12, 13) linked by signals with the control circuit, with regulating units (10, 11) controlling the hydraulic throughput of the hydraulic pumps (8, 9) in accordance with signals received from the control circuit, with a first circuit (15, 19) for generating a first signal corresponding to the design speed of the vehicle (1), with a second circuit (50, 51) for generating a second signal, corresponding to the drive speed of the first drive unit (2, 4) and with a third circuit (50, 51) for generating a third signal corresponding to the drive speed of the second drive unit (3, 5), whereby the control circuit reacting to a steering signal corresponding to a steering angle of the steering system (12, 13) modifies the control signal for the regulating system (10) of hydraulic pump (8) of the drive unit (2, 4) on the inside of the curve by comparison with the control signal for the said regulating system (10) with a steering signal corresponding to the straight-ahead position of the steering system (12, 13) in such a way as to ensure that the vehicle (1) passes through the curve corresponding to this steering angle, with the control signal for the in the given case upper regulating system (11), characterised by a comparator circuit (58), to which the first, second and third signal are fed and which generates a signal causing the vehicle (1) to be braked, if the second signal or the third signal is greater than the first signal.

2. Circuit according to claim 1, characterised in that the first, second and third circuit (15, 19 ; 50, 51) are so designed that the second and third signal are, if the hydraulic pumps (8, 9) operate faultlessly, 5 % to 20 % lower than the first signal.

3. Control circuit according to claim 1 or 2, characterised in that the second and third circuit (50, 51) consist respectively in a pulse counter (50) mounted on the drive unit (2, 3, 4, 5) and a frequence/voltage converter (51) associated with the pulse counter (50).

4. Control circuit according to claim 1 or 2, characterised in that the second and third circuit (50, 51) consist respectively in a potentiometer associated with the regulating systems (10, 11).

## Revendications

1. Circuit de commande pour un véhicule, notamment un véhicule chenillé (1), qui comporte un moteur (6) servant à entraîner des pompes hydrauliques (8, 9), qui sont reliées selon une liaison fluidique à des unités d'entraînement (2-5), comportant un mécanisme de direction (12, 13) relié par transmission de signaux au circuit de commande, des dispositifs de réglage (10, 11) qui commandent le débit hydraulique des pompes hydrauliques (8, 9) en fonction de signaux reçus par le circuit de commande, un premier circuit (15, 19) servant à produire un premier signal qui représente la vitesse de consigne du véhicule (1), un second circuit (50, 51) servant à produire un second signal qui représente la vitesse d'entraînement de la première unité d'entraînement (2, 4), et un troisième circuit (50, 51) servant a produire un troisième signal qui représente la vitesse d'entraînement de la seconde unité d'entraînement (3, 5), le circuit de commande modifiant, en réaction à un signal de braquage représentant un braquage du mécanisme de direction (12, 13), le signal de commande du dispositif de réglage (10) de la pompe hydraulique (8) de l'unité d'entraînement (2, 4) située sur le côté intérieur de la courbe, par rapport au signal de commande pour ce dispositif de réglage (10) dans le cas d'une orientation, correspondant à un déplacement en ligne droite, du mécanisme de direction (12, 13), de telle sorte que lorsque le signal de commande pour l'autre dispositif respectif de réglage (11) est inchangé, le véhicule (1) suit la courbe correspondant à ce braquage, caractérisé par un circuit comparateur (58), auquel les premier, second et troisième signaux sont envoyés et qui produit un signal déclenchant un freinage du véhicule (1) lorsque le second signal ou le troisième signal est supérieur au premier signal.

2. Circuit selon la revendication 1, caractérisé en ce que les premier, second et troisième circuits (15, 19 ; 50, 51) sont agencés de telle sorte que les second et troisième signaux sont inférieurs, de 5 % à 20 %, au premier signal dans le cas d'un fonctionnement défectueux des pompes hydrauliques (8, 9).

3. Circuit de commande selon la revendication 1 ou 2, caractérisé en ce que les second et troisième circuits (50, 51) sont constitués par un compteur d'impulsions (50) monté sur l'une des unités d'entraînement (2, 3, 4, 5), et par un convertisseur de fréquence-tension (51) relié au compteur d'impulsions (50).

4. Circuit de commande selon la revendication 1 ou 2, caractérisé en ce que les second et troisième circuits (50, 51) sont formés respectivement par un potentiomètre relié aux dispositifs de réglage (10, 11).

Fig.1

Fig. 2

Fig.3

Fig.4

Fig. 5

Fig.6

Fig.7

Fig. 8

Fig. 10

Fig. 9

Fig. 11

0 151 207